# FASCICULE DE BREVET EUROPEEN

(11) **EP 0 883 050 B1**
(45) Date de publication et mention de la délivrance du brevet: **27.08.2003**
(21) Numéro de dépôt: 98401313.6
(22) Date de dépôt: 02.06.1998
(51) Int. Cl.: G05D 23/19, F24F 11/00

(54) **Procédé et système de gestion d'énergie autoconfigurable pour l'habitat**
Selbstkonfigurierende Methode und System zur Energieverwaltung in einem Wohnbereich
Self-configurating method and system for energy management of a locality

(30) Priorité: 04.06.1997 FR 9706870
(43) Date de publication de la demande: 09.12.1998
(73) Titulaire: ELECTRICITE DE FRANCE, 75008 Paris (FR)
(72) Inventeur: Bailly, Noel, 77920 Samois sur Seine (FR); Esteve, Daniel, 31000 Ramonville (FR)
(74) Mandataire: Poulin, Gérard

(56) Documents cités:
- US-A- 4 873 649
- US-A- 5 170 935
- US-A- 5 570 838

## Description

### Domaine de l'invention

L'invention concerne un procédé de gestion d'énergie destiné à l'habitat individuel ou collectif ; elle concerne également un système de gestion d'énergie autoconfigurable mettant en oeuvre ce procédé.

L'invention trouve des applications dans le domaine de la domotique.

### Etat de la technique

Il est courant actuellement d'utiliser toutes sortes de systèmes programmables permettant de gérer les dépenses d'énergie dans les habitats individuels ou collectifs et, en particulier, les dépenses d'énergie de chauffage. Pour cela, on connaît toutes sortes de systèmes de programmation qui gèrent les dépenses d'énergie en fonction des choix des utilisateurs. De nombreux systèmes de gestion d'énergie sont décrits dans le document intitulé "Gestion d'énergie : du thermostat mécanique au système numérique" de Noël BAILLY, publié dans la revue "Les cahiers techniques du bâtiment", n° 122 bis, Décembre 1990.

La plupart de ces systèmes programmables se présentent sous la forme d'un boîtier comportant une interface de programmation et des actionneurs agissant sur des appareils à programmer (convecteurs et autres appareils domestiques). Ces actionneurs peuvent être associés à des capteurs (compteurs, mesures thermiques, sécurités, etc.).

Avec les systèmes programmables courants, l'utilisateur doit programmer lui-même son système en indiquant très précisément, d'une part, les horaires où il souhaite que ses appareils soient mis en route et, d'autre part, les conditions de fonctionnement qu'il exige. Par exemple, pour le chauffage d'un habitat individuel, l'utilisateur doit indiquer les plages horaires et les températures qu'il souhaite obtenir et les corrections qu'il souhaite éventuellement voir appliquer, en particulier en fonction du tarif proposé par le producteur d'énergie.

Cependant, avec de tels systèmes programmables, la programmation nécessite l'application d'une procédure technique qui rebute beaucoup d'utilisateurs, ce qui se traduit par une programmation initiale très souvent insatisfaisante et qui nécessite des interventions manuelles correctrices des utilisateurs. Or, les retouches à la programmation initiale ne sont, généralement, pas faites, ce qui entraîne très souvent une insatisfaction du client. De plus, du fait de la difficulté que rencontre l'utilisateur à programmer son installation, ces systèmes programmables ne sont souvent utilisés que pour une petite partie de leurs possibilités.

Par ailleurs, ces systèmes ne prennent pas en compte la notion globale de confort qui est très variable d'un utilisateur à l'autre et qui dépend de facteurs extérieurs, tels que l'ensoleillement, la température extérieure, le moment de la journée. Tous ces facteurs peuvent influencer la perception de l'utilisateur, mais ne sont pas pris en compte par ces systèmes programmables qui ne règlent le plus souvent que la température intérieure.

### Exposé de l'invention

L'invention a justement pour but de proposer un système de gestion d'énergie dans un habitat qui permet une utilisation ergonomique et une prise en compte du confort ressenti par l'utilisateur. A cette fin, l'invention propose un procédé et un système de gestion d'énergie utilisant des techniques d'apprentissage et un concept d'adaptabilité, qui permettent de prendre en compte les besoins de confort de l'utilisateur et éventuellement le coût d'utilisation sans qu'il ait à effectuer une programmation du système.

Un des buts de l'invention est donc d'apprendre à un automatisme les désidérata des occupants de l'habitat, au moyen d'un minimum de commandes et de manipulations.

Ce système "autoconfigurable" est basé sur les habitudes des utilisateurs de l'habitat. Il prend en compte les habitudes de ces utilisateurs, les mémorise dans une base de données et recherche ensuite, dans la base de données, les situations qui sont identiques, ou qui ressemblent le plus, à une situation présente. En particulier, le système permet d'anticiper la commande du chauffage (par exemple un convecteur). Pour cela, il anticipe l'arrivée des utilisateurs en préchauffant l'habitat et il anticipe aussi leur départ en effectuant un arrêt anticipé du chauffage en fonction de la réponse thermique du bâtiment.

D'une façon générale, l'apprentissage utilise une logique qui compare la température de confort qu'il doit y avoir dans l'habitat et la température qu'il fera dans cet habitat, avec les conditions actuelles. Le résultat de cette comparaison permettra de savoir s'il faut anticiper une mise en marche du chauffage ou un arrêt du chauffage. S'il n'y a personne dans l'habitat, le système peut regarder si quelqu'un sera présent dans un certain intervalle de temps, en fonction des habitudes mémorisées. Cela permet d'obtenir la température de confort souhaitée au moment de l'arrivée des individus dans l'habitat.

De façon plus précise, l'invention concerne un procédé de gestion d'un système de sonorisation, de ventilation, de climatisation ou d'éclairage, le système étant lié au confort de personnes dans un local tertiaire, industriel ou d'habitation, caractérisé en ce qu'il consiste à déterminer de façon automatique les habitudes de confort de l'utilisateur à partir des étapes suivantes :
- mesure (A), au moyen de capteurs, d'informations horodatées relatives à l'état intérieur du local et à la météorologie, et au coût de l'énergie, et mémorisation de ces informations ;
- proposition (D), en fonction des informations mémorisées antérieurement, d'un certain niveau de confort aux personnes dans ce local ;
- permission (E) à ces personnes de modifier ce niveau de confort par pression sur une touche sensible +/- ; et
- lorsque le niveau de confort souhaité par ces personnes est atteint, détermination d'une valeur de consigne (F2) et mémorisation (F3) de cette valeur.

Elle concerne aussi un procédé de gestion d'énergie pour l'habitat (ou tout autre type de bâtiments) basé sur l'apprentissage des besoins de l'utilisateur en fonction de son rythme de vie et sur l'apprentissage de la réponse thermique du logement. Ce procédé consiste à déterminer de façon automatique des habitudes de confort de l'utilisateur à partir des étapes suivantes :
A) mesure, au moyen de capteurs, d'informations horodatées relatives au moins à la présence d'individus dans l'habitat, à la température ambiante de l'habitat, à la météorologie ;
   - acquisition du prix de l'énergie et calcul de l'heure courante ;
B) recherche, en mémoire si des informations analogues antérieures ont déjà été fournies par les capteurs et si des modifications de présence sont à prévoir ultérieurement ;
   si oui : C1) recherche, en mémoire, d'une température désirée intérieure associée à ces informations ;
   si non : C2) traitement des informations fournies par les capteurs pour en déterminer une température désirée par l'utilisateur ;
D) mémorisation de la température désirée obtenue en C1) ou C2) et application au générateur ;
H) proposition d'un niveau de confort correspondant à la température mémorisée en D) ;
E) observation si l'utilisateur émet un avis négatif sur le confort obtenu :
   . si l'utilisateur émet un avis négatif : F1) détermination d'une température désirée modifiée, puis recommencement du procédé à l'étape D) ;
   . si l'utilisateur n'émet pas d'avis négatif : F2) calcul d'une température de consigne en prenant en considération l'évolution des températures intérieures de l'habitat dues à la réponse thermique de cet habitat et à l'évolution de la météorologie et mémorisation de cette température de consigne ;
G) commande à un générateur de conditionnement d'ambiance de fournir une quantité d'énergie nécessaire pour atteindre cette température de consigne et recommencement du procédé à l'étape A).

Ce procédé peut comprendre juste après l'étape F2), une étape F3) qui consiste à afficher la température de consigne ou la température désirée déterminée pour informer l'utilisateur.

L'invention concerne également un système de gestion d'énergie pour l'habitat qui met en oeuvre le procédé exposé précédemment. Ce système de gestion d'énergie comporte des moyens de commande d'un générateur de conditionnement d'ambiance pour contrôler la quantité d'énergie que doit fournir le générateur pour atteindre la température désirée déterminée. Ces moyens de commande comprennent :
- un dispositif de gestion de l'heure ;
- un capteur météorologique ;
- des moyens de traitement et de mémorisation pour traiter les informations fournies par les capteurs ainsi que les avis de confort fournis par l'utilisateur ;
- au moins une interface système-de-gestion/utilisateur comportant :
   . un ensemble multi-capteurs comportant au moins un capteur de présence et un capteur de température ambiante, cet ensemble multi-capteurs fournissant des informations relatives à la présence d'individus dans l'habitat et à la température ambiante ;
   . des moyens d'affichage pour fournir à l'utilisateur des informations au moins sur le prix de l'énergie et la prise en compte des modifications de températures demandées ;
   . des moyens d'appréciation permettant à l'utilisateur d'indiquer sa perception du confort obtenu ; et
- un moyen d'action sur le générateur de conditionnement d'ambiance.

Avantageusement, les moyens de traitement et de mémorisation consistent en un double système d'apprentissage associé à des bases de données, et comprenant des premiers moyens d'apprentissage pour déterminer et mémoriser les températures désirées par l'utilisateur et des seconds moyens d'apprentissage et de simulation pour simuler le comportement thermique de l'habitat et calculer et mémoriser les températures de consigne à appliquer au générateur.

Selon un mode de réalisation de l'invention, le premier système d'apprentissage est un système expert et le système d'apprentissage et de simulation est un réseau de neurone.

Selon l'invention, les moyens d'appréciation comportent au moins une touche sensitive +/- permettant à l'utilisateur d'exprimer qualitativement son mécontentement sur le niveau de confort obtenu.

Selon un mode de réalisation de l'invention, les moyens d'appréciation comportent des moyens de prise en compte de dérogation aptes à discerner des informations relatives à des situations exceptionnelles.

Selon un premier mode de réalisation du système, les moyens de commande comportent un module central relié, d'une part, à l'interface système/utilisateur et, d'autre part, à un boîtier de commande du générateur de chauffage pour gérer globalement l'énergie dans l'habitat.

Selon un second mode de réalisation du système, les moyens de commande comportent un module central relié, d'une part, par un réseau de transfert d'informations à une pluralité d'interfaces système/utilisateur et, d'autre part, à une pluralité de boîtiers de commande de générateurs de chauffage, afin de gérer les différentes pièces de l'habitat indépendamment les unes des autres, chacune de ces pièces comportant une interface système/utilisateur.

L'invention peut aussi être utilisée pour des applications autres que le chauffage ; elle peut être utilisée, par exemple, pour la sonorisation, la ventilation, la climatisation, l'éclairage ou toute autre application liée au confort de personnes dans un local d'habitation, un local tertiaire, industriel, ou agricole.

### Brève description des figures

- La figure 1 représente schématiquement le diagramme fonctionnel du procédé de gestion d'énergie de l'invention ;
- les figures 2A et 2B représentent schématiquement l'interface système-de-gestion/utilisateur à partir duquel l'utilisateur peut exprimer son avis sur la température proposée par le système de l'invention ;
- la figure 3 représente un mode de réalisation du système de l'invention dans lequel l'énergie est gérée globalement pour l'habitat ; et
- la figure 4 représente un mode de réalisation du système de l'invention dans lequel l'énergie est gérée indépendamment pour chaque pièce de l'habitat.

### Exposé détaillé de modes de réalisation de l'invention

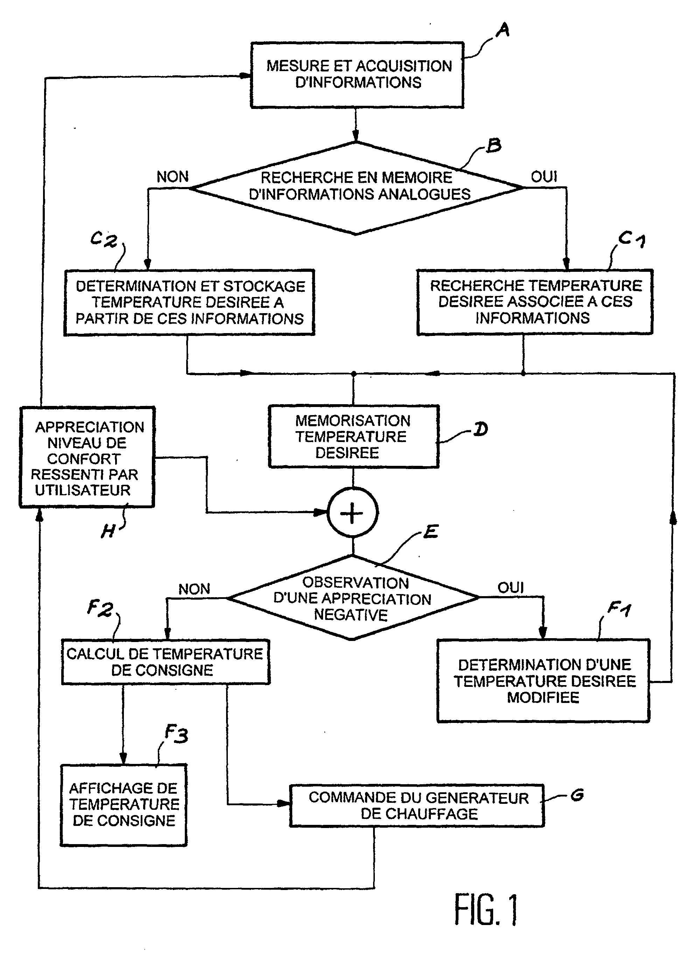

Sur la figure 1, on a représenté le diagramme fonctionnel du procédé de gestion d'énergie conforme à l'invention.

Le procédé de l'invention va être décrit, à titre d'exemple, pour une application au chauffage ; il peut s'appliquer de façon similaire à la climatisation, le générateur étant alors un climatisateur, une pompe à chaleur réversible, ou tout autre système de climatisation connu. D'une façon générale, le générateur est dénommé (notamment dans les revendications), générateur de conditionnement d'ambiance.

Le procédé de l'invention comporte une étape A) qui consiste, d'une part, à mesurer, au moyen de différents capteurs, des informations relatives à la présence d'individus dans l'habitat, à la température intérieure de l'habitat et à la météorologie et, d'autre part, à acquérir des informations relatives au prix de l'énergie, en particulier, dans le cas d'un chauffage électrique où le prix de l'énergie varie dans le temps. Toutes ces informations sont horodatées, c'est-à-dire qu'elles sont liées à l'heure et au jour courants.

Toutes ces informations influent sur le confort de l'utilisateur. Ces informations sont données à titre d'exemple ; elles pourraient être complétées par d'autres informations, telles que l'orientation de cet habitat (nord, sud, ..).

Le procédé comporte ensuite une étape B) qui consiste à rechercher dans la mémoire du système si des informations de présence, de température intérieure, d'horaire, de coût d'énergie et de données météorologiques analogues à celles qui viennent d'être acquises par les capteurs, sont déjà enregistrées dans la mémoire. Si c'est le cas, alors on passe à l'étape C1 qui consiste à rechercher en mémoire, la température désirée qui est associée à ces informations, c'est-à-dire la température qui avait été établie lorsqu'une situation identique antérieure s'était présentée. Dans le cas contraire, on détermine, à l'étape C2), la température désirée par l'utilisateur à partir des informations fournies par les capteurs.

La température désirée retenue à l'étape C1), ou à l'étape C2) est alors mémorisée lors de l'étape D.

La détermination et la mémorisation de cette température désirée sont réalisées à l'aide de moyens d'apprentissage qui peuvent consister, par exemple, en un système expert.

Le procédé de l'invention comporte ensuite une étape E) qui consiste à observer si l'utilisateur est satisfait du confort obtenu. L'utilisateur peut alors montrer son mécontentement en demandant de corriger la température désirée à la hausse, ou à la baisse, selon sa perception du confort. Si c'est le cas, le système détermine, dans une étape F1, une température désirée modifiée ; le procédé se poursuit alors par une nouvelle étape D) dans laquelle la température désirée est la température qui vient d'être modifiée.

Au contraire, si l'utilisateur est content du confort obtenu, le système calcule une température de consigne.

Le calcul de la température de consigne du régulateur de chauffage peut se faire à l'aide de moyens d'apprentissage et de simulation qui permettent de simuler le comportement thermique du bâtiment. L'apprentissage du système se fait en mémorisant les températures intérieures observées lors de la mise en service ou à l'arrêt du générateur de chauffage. Les données de température extérieure et d'ensoleillement doivent aussi être mémorisées, de même que la puissance électrique fournie par le générateur.

Les moyens d'apprentissage et de simulation du comportement thermique du bâtiment peuvent consister en un réseau de neurones.

La température de consigne, ou la température désirée, peut éventuellement être affichée (étape F3)).

La température de consigne est alors appliquée au régulateur du générateur de chauffage dans une étape G.

L'étape G est celle de la commande du générateur de chauffage ; le générateur ainsi commandé, fournit l'énergie nécessaire pour que l'habitat atteigne la température désirée choisie par l'utilisateur. Mais, l'utilisateur peut encore indiquer (bloc H), à ce moment, ou à tout moment ultérieur, sa perception du confort (trop chaud, trop froid) en appuyant sur les moyens d'appréciation qui sont, par exemple, une touche " + " pour une température souhaitée plus chaude ou une touche " -" pour une température souhaitée plus froide.

Ainsi, le système prend en compte immédiatement toutes manifestations de mécontentement de la part de l'utilisateur pour modifier le régime de fonctionnement du générateur selon les désidérata de cet utilisateur. De plus, le système intègre ces modifications aux moyens d'apprentissage.

Les étapes A à H du procédé sont ensuite réitérées régulièrement afin de modifier automatiquement le régime de fonctionnement du générateur chaque fois que l'une au moins des informations fournies par l'ensemble multi-capteurs est modifiée ou chaque fois que l'utilisateur intervient pour signaler un niveau de confort déficient.

Lors de la première mise en fonctionnement du système, aucun historique sur les habitudes et le comportement de l'utilisateur n'est connu. Par défaut, un scénario de températures désirées a été introduit au préalable en mémoire. Le système fait alors une proposition de température basée, par exemple, sur le critère du coût de la consommation d'énergie et l'occupant lui signale son mécontentement à l'aide des touches " + " et " - ". Cette information de mécontentement est alors mémorisée avec son environnement de données (informations fournies par l'ensemble multi-capteurs), ce qui donne le premier enregistrement personnalisé dans la mémoire.

C'est cet enregistrement de toutes les réclamations faites par l'occupant lors de la mise en place du système qui sera utilisé comme base de données d'apprentissage pour modéliser le comportement de l'utilisateur. Cette base de données, qui constitue l'un des modes de réalisation de la mémoire du système, sera ensuite mise à jour au fur et à mesure des utilisations. Les habitudes de confort et de présence de l'utilisateur seront ainsi consignées et réappliquées chaque fois que les conditions d'environnement données (informations fournies par les capteurs) seront reproduites.

Ce procédé de gestion d'énergie permet ainsi d'éviter toute programmation du système, puisque celui-ci s'adapte automatiquement aux habitudes de confort de l'utilisateur.

Le système selon l'invention commande un générateur de chauffage (non représenté sur la figure 1 par mesure de simplification) qui est apte à fournir l'énergie nécessaire et suffisante pour atteindre la température désirée. Des moyens de commande permettent de contrôler la quantité d'énergie que doit fournir ce générateur.

Ces moyens de commande comprennent un ou plusieurs capteurs (voir page 12), des moyens d'action sur-le générateur de chauffage soit par téléchargement de la consigne de température (si le régulateur du générateur le permet), soit par activation des niveaux de consigne (si le régulateur du générateur le permet), soit par envoi d'ordre de marche et d'arrêt à un organe de puissance pilotant le générateur.

Des capteurs dits de température permettent de détecter la température intérieure de l'habitat.

Le capteur météorologique comprend une prise de température extérieure et, avantageusement, un capteur d'ensoleillement et des capteurs de vitesse et de direction du vent.

Des capteurs, autres que les capteurs de température, les capteurs de présence, les capteurs météorologiques et un capteur fournissant le prix de l'énergie (compteur électrique dans le cas du chauffage électrique) peuvent aussi être utilisés dont les informations seront prises en compte pour établir la température désirée ; on peut envisager d'utiliser aussi des capteurs d'intensité électrique, etc.

L'ensemble multi-capteurs fournit donc au système, au moins des informations relatives à la présence d'individus dans l'habitat et à la température ambiante de cet habitat.

Les moyens de commande comprennent de plus des moyens de traitement et de mémorisation qui consistent en un double système d'apprentissage :
. un premier système d'apprentissage qui permet de déterminer les températures désirées par l'utilisateur ; il peut être réalisé, par exemple, au moyen d'un système expert ;
. un second système d'apprentissage et de simulation qui permet de simuler le comportement thermique du bâtiment ; il peut être réalisé par des réseaux de neurones, ou par toute autre technique issue de l'automatique.

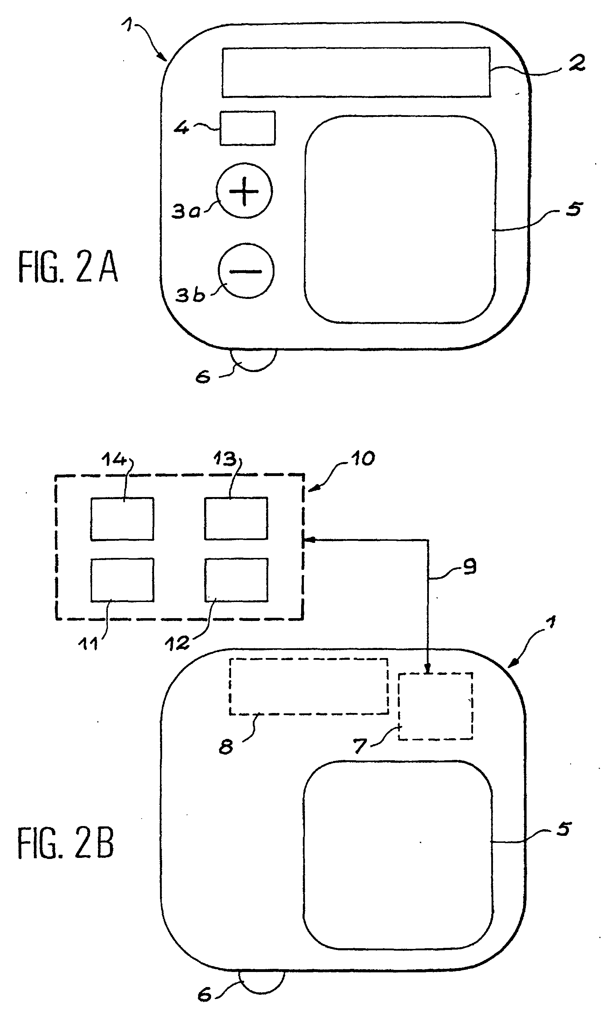

Les moyens de commande comportent, en outre, au moins une interface système/utilisateur, grâce à laquelle l'utilisateur peut donner une appréciation qualitative sur la température réglée par le système. Une telle interface système/utilisateur est représentée schématiquement sur les figures 2A et 2B. C'est à partir de cette interface que l'utilisateur peut manifester son mécontentement sur le niveau de confort généré par le système.

Plus précisément, la figure 2A représente l'interface utilisateur vue de face. Cette interface, référencée 1, comporte un afficheur alphanumérique 2 sur lequel sont affichées des informations liées au fonctionnement du système (coût de l'énergie, prise en compte des appréciations données par l'utilisateur sur l'interface).

L'afficheur alphanumérique peut indiquer aussi, à l'utilisateur, la période tarifaire dans laquelle le système se trouve au moment présent, les températures intérieure, extérieure, etc.

Selon un autre mode de réalisation de l'invention, cet afficheur peut consister en un système de diodes électroluminescentes.

L'interface 1 comporte, en outre, des moyens d'appréciation, référencés 3a et 3b ; selon le mode de réalisation représenté sur cette figure 2A, une touche sensitive + (référencée 3a) et une touche sensitive - (référencée 3b) permettent à l'utilisateur d'exprimer qualitativement son mécontentement en demandant d'augmenter ou de diminuer la température proposée.

Les touches sensitives +/- sont associées à un traitement en ligne qui mesure le contentement ou le mécontentement de l'utilisateur, par exemple, par le nombre d'interventions accumulées dans une tranche horaire, de l'ordre de quelques heures.

Dans un autre mode de réalisation, une seule touche, variable dans les deux sens, permet à l'utilisateur d'exprimer son éventuel mécontentement.

L'interface 1 peut comporter, en outre, des moyens de prise en compte de dérogation qui permettent, à l'utilisateur, de signaler au système une situation exceptionnelle qui ne doit pas être mémorisée dans la base de données. Ces moyens sont schématisés sur la figure 2A par une touche de dérogation 4, qui, lorsqu'elle est sélectionnée, indique au système de ne pas prendre en compte, dans l'apprentissage, les instructions suivantes de l'utilisateur (instructions données au moyen des touches sensitives 3a et 3b). Par exemple, en cas de maladie d'un des individus de l'habitat, ou d'une réunion exceptionnelle avec un grand nombre d'invités, ou de toute autre situation exceptionnelle, un des utilisateurs peut appuyer sur la touche de dérogation 4, de sorte que le système ne mémorise pas cet événement.

Sur le mode de réalisation représenté par la figure 2A, l'interface 1 comporte un capteur 5 donnant des informations sur la situation intérieure de l'habitat, par exemple un capteur de présence du type infrarouge actif ou passif pour détecter la présence d'au moins un occupant. Un capteur de température intérieure 6 est aussi intégré à cette interface.

Ceci n'est toutefois qu'un mode de réalisation possible. Un ou plusieurs autres types de capteurs fournissant des données relatives à la situation intérieure de l'habitat peuvent être implantés sur cette interface (détecteur sonore, caméra, etc.).

La figure 2B représente selon une vue arrière l'interface système/utilisateur 1 connectée sur le module central 10. On a représenté, schématiquement, sur l'interface de cette figure 2B, le capteur de présence 5. Ce capteur fournit, à l'unité de communication 7, les informations relatives à la présence d'individus dans l'habitat. Ces informations sont ensuite retransmises, via le réseau de communication 9, au module central 10, symbolisé par des pointillés sur la figure 2B. Les informations provenant des autres capteurs (non représentés sur cette figure) sont également fournies au module central 10 via le réseau de communication 9 et l'unité de communication 7. Ce réseau peut être de type informatique (par exemple RS 232).

L'interface 1 comporte, de plus, une unité de gestion de l'affichage, référencée 8, qui gère l'affichage des différentes données sur l'afficheur 2.

Le module central 10 comporte une unité d'alimentation 11, une unité de communication 12 qui reçoit les informations envoyées depuis l'interface 1, une unité d'acquisition 13 des informations relatives à la météorologie, aux tarifs, etc., et une unité de traitement 14 qui détermine la température désirée par l'utilisateur et calcul la température de consigne ; cette unité de traitement 14 assure aussi l'élaboration de la commande du régulateur du générateur. C'est aussi cette unité de traitement 14 qui prend en considération l'appréciation donnée par l'utilisateur au moyen des touches 3a, 3b et 4.

Comme on l'a dit précédemment, le système de gestion d'énergie de l'invention comporte des moyens de mémorisation qui sont aptes, non seulement à mémoriser les différentes informations relevées par les capteurs, mais aussi à les associer à la température de consigne déterminée pour chaque situation, ce qui revient à dire que ces moyens de mémorisation fusionnent les données relatives à la présence d'individus, aux températures intérieure et extérieure, à l'appréciation de l'utilisateur et à la tarification en cours.

L'unité de traitement de l'information 14 intègre un système électronique d'apprentissage. Cette unité 14, associée aux moyens de mémorisation, (qui peuvent être une base de données), va apprendre les habitudes de confort de l'utilisateur, en termes, par exemple, de température désirée. Cette température sera ensuite reproduite chaque fois que les conditions d'environnement données, c'est-à-dire chaque fois que la situation présente (horaire, températures, ensoleillement, ...) sera reproduite. Le système électronique d'apprentissage est donc apte à mémoriser une multitude de situations et à rapprocher la situation présente de ces situations antérieures pour proposer une décision, c'est-à-dire une température désirée. Lorsque l'utilisateur intervient, le système d'apprentissage prend en compte cette nouvelle intervention de l'utilisateur et mémorise les nouvelles modifications apportées.

Les unités de communication 7 et 12 gèrent la communication d'informations dans les deux sens, du module central 10 vers l'interface 1 et de l'interface 1 vers le module central 10.

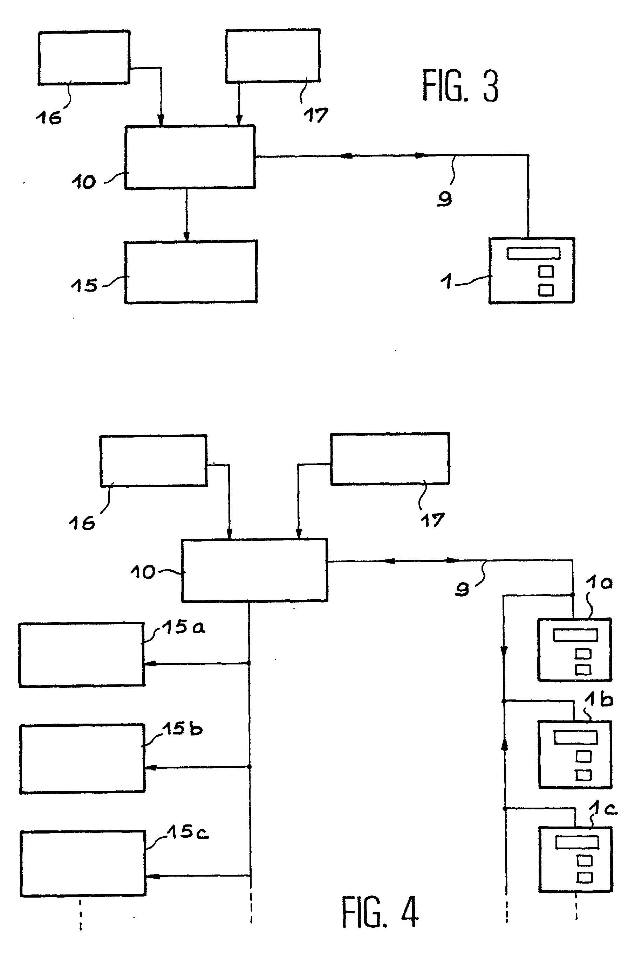

Sur la figure 3, on a représenté schématiquement l'architecture d'un système de gestion de chauffage électrique permettant de gérer globalement le chauffage de l'habitat. Cette architecture comporte un module central 10 connecté par un réseau de communication 9 (ou réseau de transfert d'informations) à l'interface système/utilisateur 1. Ce module central 10 est relié également à un capteur météorologique 16 et à un compteur électrique 17 dont il reçoit les informations. Après traitement des informations reçues du capteur 16, du compteur électrique 17 et de l'interface 1, le module central 10 envoie un ordre de commande au boîtier de commande 15 (ou émetteur de commande ou moyen d'action) du générateur de chauffage.

Sur la figure 4, on a représenté schématiquement l'architecture d'un système de gestion de chauffage électrique permettant de gérer le chauffage indépendamment dans plusieurs pièces de l'habitat. Cette architecture permet donc de choisir une température désirée différente dans chaque pièce de l'habitat. Pour cela, le système comporte une pluralité d'interfaces la, 1b, 1c, etc., réparties chacune dans une pièce de l'habitat et une pluralité de boîtiers de commande 15a, 15b, 15c, etc., des générateurs de chauffage, chaque boîtier commandant l'émission de chauffage pour l'une des pièces de l'habitat.

Le procédé de gestion d'énergie qui vient d'être décrit peut également être appliqué à la climatisation d'un bâtiment, ou encore au rafraîchissement, à la ventilation, à l'éclairage, à la sonorisation d'un bâtiment qui peut être un logement, ou bien un local tertiaire, industriel ou agricole.

Pour ces applications, le système de gestion est approximativement le même que celui qui vient d'être décrit ; seuls les capteurs peuvent différer : capteurs sonores à la place de capteurs météorologiques pour une application à la sonorisation d'un local, par exemple. Le procédé reste également identique à celui qui vient d'être décrit, les informations traitées pouvant toutefois être de natures différentes (en fonction des types de capteurs utilisés).

Quelle que soit l'application, le procédé et le système de l'invention permettent de gérer une application (éclairage, chauffage, etc.) dans le but d'améliorer le confort des utilisateurs et/ou de réduire le coût d'utilisation sans nécessiter, de leur part, aucune programmation du système.

## Revendications

1. Procédé de gestion d'un système de sonorisation, de ventilation, de climatisation ou d'éclairage, le système étant lié au confort de personnes dans un local tertiaire, industriel ou d'habitation, **caractérisé en ce qu'**il consiste à déterminer de façon automatique les habitudes de confort de l'utilisateur à partir des étapes suivantes :
- mesure (A), au moyen de capteurs, d'informations horodatées relatives à l'état intérieur du local, à la météorologie et au coût de l'énergie, et mémorisation de ces informations ;
- proposition (D), en fonction des informations mémorisées antérieurement, d'un certain niveau de confort aux personnes dans ce local ;
- permission (E) à ces personnes de modifier ce niveau de confort par pression sur une touche sensible +/- ; et
- lorsque le niveau de confort souhaité par ces personnes est atteint, détermination d'une valeur de consigne (F2) et mémorisation (F3) de cette valeur.

2. Procédé de gestion d'une énergie de chauffage ou de climatisation pour l'habitat, **caractérisé en ce qu'**il consiste à déterminer de façon automatique des habitudes de confort de l'utilisateur à partir des étapes suivantes :
A) mesure, au moyen de capteurs, d'informations horodatées relatives au moins à la présence d'individus dans l'habitat, à la température ambiante de l'habitat, à la météorologie ;
- acquisition du prix de l'énergie et calcul de l'heure courante ;
B) recherche, en mémoire, si des informations analogues antérieures ont déjà été fournies par les capteurs et si des modifications de présence sont à prévoir ultérieurement ;
si oui : C1) recherche, en mémoire, d'une température désirée intérieure associée à ces informations ;
si non : C2) traitement des informations fournies par les capteurs pour en déterminer une température désirée par l'utilisateur ;
D) mémorisation de la température désirée obtenue en C1) ou C2) et application au générateur ;
H) proposition d'un niveau de confort correspondant à la température mémorisée en D) ;
E) observation si l'utilisateur émet un avis négatif sur le confort obtenu :
. si l'utilisateur émet un avis négatif : F1) détermination d'une température désirée modifiée, puis recommencement du procédé à l'étape D) ;
. si l'utilisateur n'émet pas d'avis négatif : F2) calcul d'une température de consigne en prenant en considération l'évolution des températures intérieures de l'habitat dues à la réponse thermique de cet habitat et à l'évolution de la météorologie et mémorisation de cette température de consigne ;
G) commande, à un générateur de conditionnement d'ambiance, pour fournir une quantité d'énergie nécessaire pour atteindre cette température de consigne et recommencement du procédé à l'étape A).

3. Procédé selon la revendication 2, **caractérisé en ce qu'**il comprend juste après l'étape F2), une étape F3) qui consiste à afficher la température de consigne ou la température désirée déterminée pour informer l'utilisateur.

4. Système de gestion d'une énergie de chauffage ou de climatisation pour l'habitat mettant en oeuvre le procédé selon la revendication 2 ou 3 et comportant des moyens de commande d'un générateur de conditionnement d'ambiance pour contrôler la quantité d'énergie que doit fournir le générateur pour atteindre une température désirée, **caractérisé en ce que** les moyens de commande comprennent :
- un dispositif de gestion de l'heure ;
- un capteur météorologique ;
- des moyens (10) de traitement et de mémorisation pour traiter les informations fournies par les capteurs ainsi que les avis de confort fournis par l'utilisateur ;
- au moins une interface système-de-gestion/utilisateur (1) comportant :
. un ensemble multi-capteurs (5) comportant au moins un capteur de présence et un capteur de température ambiante, cet ensemble multi-capteurs fournissant des informations relatives à la présence d'individus dans l'habitat et à la température ambiante de l'habitat ;
. des moyens d'affichage (2 ; 8) pour fournir à l'utilisateur des informations au moins sur le prix de l'énergie et la prise en compte des modifications de températures demandées ;
. des moyens d'appréciation (3 ; 4) permettant à l'utilisateur d'indiquer sa perception du confort obtenu ; et
- un moyen d'action (15) sur le générateur de conditionnement d'ambiance.

5. Système de gestion d'énergie selon la revendication 4, **caractérisé en ce que** les moyens de traitement et de mémorisation consistent en un double système d'apprentissage associé à des bases de données, et comprenant des premiers moyens d'apprentissage pour déterminer et mémoriser les températures désirées par l'utilisateur et des seconds moyens d'apprentissage et de simulation pour simuler le comportement thermique de l'habitat et calculer et mémoriser les températures de consigne à appliquer au générateur.

6. Système de gestion d'énergie selon la revendication 5, **caractérisé en ce que** le premier système d'apprentissage est un système expert.

7. Système de gestion d'énergie selon la revendication 5 ou 6, **caractérisé en ce que** le système d'apprentissage et de simulation est un réseau de neurones.

8. Système de gestion d'énergie selon l'une quelconque des revendications 4 à 7, **caractérisé en ce que** les moyens d'appréciation comportent au moins une touche sensitive +/- (3a, 3b) permettant à l'utilisateur d'exprimer qualitativement son mécontentement sur le niveau du confort obtenu.

9. Système de gestion d'énergie selon l'une quelconque des revendications 4 à 7, **caractérisé en ce que** les moyens d'appréciation comportent des moyens (4) de prise en compte de dérogation aptes à discerner des informations relatives à des situations exceptionnelles.

10. Système de gestion d'énergie selon l'une quelconque des revendications 4 à 9, **caractérisé en ce que** les moyens de commande comportent un module central (10) relié, d'une part, à l'interface système/utilisateur et, d'autre part, à un boîtier de commande du générateur de chauffage (15) pour gérer globalement l'énergie de l'habitat.

11. Système de gestion d'énergie selon l'une quelconque des revendications 4 à 9, **caractérisé en ce que** les moyens de commande comportent un module central (10) relié, d'une part, par un réseau de transfert d'informations (9) à une pluralité d'interfaces système/utilisateur (1a, ..., 1c) et, d'autre part, à une pluralité de boîtiers de commande de générateurs de chauffage (15a,..., 15c), afin de gérer les différentes pièces de l'habitat indépendamment les unes des autres, chacune de ces pièces comportant une interface système/utilisateur.

## Patentansprüche

1. Verfahren zum Management eines Systems zur Schalldämpfung, zur Ventilation, zur Klimatisierung oder Beleuchtung, wobei das System mit dem Komfort von Personen in einem tertiären, industriellen oder zum Wohnen vorgesehenen Raum verbunden ist, **dadurch gekennzeichnet, daß** es darin besteht, auf automatische Art und Weise die Komfort-Gewohnheiten des Benutzers anhand folgender Schritte zu bestimmen:
- Messung (A) mittels Meßfühlern von zeitbezogenen Informationen bezüglich des inneren Zustands des Raums, der Meteorologie- und der Energiekosten, und Speicherung dieser Informationen,
- Vorschlag (D) als Funktion der vorher gespeicherten Informationen eines bestimmten Komfort-Niveaus für Personen in diesem Raum,
- Erlaubnis (E) für diese Personen, dieses Komfort-Niveau durch Drücken einer sensitiven +/- -Taste zu modifizieren, und
- Bestimmung eines Referenzwerts (F2) und Speicherung (F3) dieses Werts, wenn das von diesen Personen gewünschte Komfort-Niveau erreicht ist.

2. Verfahren zum Management einer Heiz- oder Klimatisierungsenergie für den Wohnraum, **dadurch gekennzeichnet, daß** es darin besteht, die Komfort-Gewohnheiten des Benutzers anhand folgender Schritte auf automatische Weise zu bestimmen:
A) Messen, mittels Meßfühlern, von zeitbezogenen Informationen bezüglich mindestens der Präsenz von Personen in dem Wohnraum, der Umgebungstemperatur des Wohnraums und der Meteorologie;
- Erfassen des Preises der Energie und Berechnen der aktuellen Uhrzeit,
B) Suche, im Speicher, ob analoge vorherige Informationen bereits von den Meßfühlern geliefert wurden und ob die Modifikationen der Präsenz später vorzusehen sind,
wenn ja: C1) Suche, im Speicher, nach einer gewünschten Innentemperatur, die diesen Informationen zugeordnet ist,
wenn nein: C2) Verarbeitung der von den Meßfühlern gelieferten Informationen, um daraus eine vom Benutzer gewünschte Temperatur zu bestimmen,
D) Speicherung der gewünschten, bei C1) oder C2) erhaltenen Temperatur und Anwenden auf den Generator, H) Vorschlag eines Komfort-Niveaus, das der bei D) gespeicherten Temperatur entspricht,
E) Beobachtung, ob der Benutzer eine negative Benachrichtigung über den erhaltenen Komfort abgibt:
· wenn der Benutzer eine negative Benachrichtigung abgibt:
F1) Bestimmung einer gewünschten modifizierten Temperatur, anschließend Wiederbeginn des Verfahrens bei Schritt D),
· wenn der Benutzer keine negative Benachrichtigung abgibt:
F2) Berechnen einer Bezugstemperatur, wobei die Entwicklung der Innentemperaturen des Wohnraums infolge des thermischen Ansprechverhaltens dieses Wohnraums und der Entwicklung der Meteorologie berücksichtigt werden, und Speicherung dieser Bezugstemperatur,
G) Befehl an einen Generator zur Konditionierung der Umgebung, damit er eine notwendige Energiemenge liefert, um diese Bezugstemperatur zu erreichen, und Wiederbeginn des Verfahrens bei Schritt A).

3. Verfahren nach Anspruch 2, **dadurch gekennzeichnet, daß** es unmittelbar nach dem Schritt F2) einen Schritt F3) umfaßt, der darin besteht, die Bezugstemperatur oder die bestimmte gewünschte Temperatur anzuzeigen, um den Benutzer zu informieren.

4. System zum Management einer Heiz- oder Klimatisierungsenergie für einen Wohnraum, das das Verfahren gemäß Anspruch 2 oder 3 einsetzt und Steuermittel eines Generators zur Konditionierung der Umgebung umfaßt, um die Energiemenge zu steuern, die der Generator liefern muss, um eine gewünschte Temperatur zu erreichen, **dadurch gekennzeichnet, daß** die Steuermittel umfassen:
- eine Zeitmanagementvorrichtung,
- einen meteorologischen Meßfühler,
- Mittel (10) zur Verarbeitung und zur Speicherung, um die von den Meßfühlern gelieferten Informationen sowie die vom Benutzer gelieferten Benachrichtigungen hinsichtlich des Komforts zu verarbeiten,
wobei mindestens eine Schnittstelle Steuersystem/Benutzer (1) umfaßt:
· eine Anordnung mehrerer Meßfühler (5), die mindestens einen Präsenz-Meßfühler und einen Umgebungstemperatur-Meßfühler aufweist, wobei diese Einheit mehrerer Meßfühler Informationen bezüglich der Präsenz von Personen im Wohnraum und der Umgebungstemperatur des Wohnraums liefern,
· Mittel zum Anzeigen (2;8), um dem Benutzer Informationen mindestens über den Preis der Energie und die Berücksichtigung der angeforderten Temperaturmodifikationen liefert,
· Bewertungsmittel (3;4) die dem Benutzer die Angabe der Wahrnehmung des erhaltenen Komforts ermöglichen, und
· ein Betätigungsmittel (15) des Generators zur Konditionierung der Umgebung.

5. System zum Management von Energie nach Anspruch 4, **dadurch gekennzeichnet, daß** die Verarbeitungsmittel und Speichermittel ein Datenbanken zugeordnetes doppeltes Lernsystem umfassen, und erste Lernmittel zum Bestimmen und Speichern der vom Benutzer gewünschten Temperaturen sowie zweite Lern- und Simulationsmittel zum Simulieren des thermischen Verhaltens des Wohnraums und zum Berechnen und Speichern der auf den Generator anzuwendenden Bezugstemperaturen umfassen.

6. System zum Management von Energie nach Anspruch 5, **dadurch gekennzeichnet, daß** das erste Lernsystem ein Expertensystem ist.

7. System zum Management von Energie nach Anspruch 5 oder 6, **dadurch gekennzeichnet, daß** das Lern- und Simulationssystem ein neuronales Netz ist.

8. System zum Management von Energie nach einem der Ansprüche 4 bis 7, **dadurch gekennzeichnet, daß** die Einschätzmittel mindestens eine sensitive +/- -Taste (3a, 3b) umfassen, die es dem Benutzer gestatten, seine Unzufriedenheit über das erhaltene Komfort-Niveau qualitativ auszudrücken.

9. System zum Management von Energie nach einem der Ansprüche 4 bis 7, **dadurch gekennzeichnet, daß** die Bewertungsmittel Mittel (4) zum Berücksichtigen einer Abweichung umfassen, die Informationen bezüglich außerordentlicher Situationen unterscheiden können.

10. System zum Management von Energie nach einem der Ansprüche 4 bis 9, **dadurch gekennzeichnet, daß** die Steuermittel ein zentrales Modul (10) umfassen, das einerseits mit einer Schnittstelle System/Benutzer und andererseits mit einem Steuerkasten des Generators der Heizung (15) verbunden ist, um die Energie des Wohnraums global zu steuern.

11. System zum Management von Energie nach einem der Ansprüche 4 bis 9, **dadurch gekennzeichnet, daß** die Steuermittel ein zentrales Modul (10) umfassen, das einerseits über ein Informations-Übertragungsnetz (9) mit mehreren Schnittstellen System/Benutzer (1a,...,1c) verbunden ist, und andererseits mit mehreren Steuerkästen von Heizungsgeneratoren (15a,...,15c) verbunden ist, um die verschiedenen Zimmer des Wohnraums unabhängig voneinander zu steuern, wobei jedes dieser Zimmer eine Schnittstelle System/Benutzer aufweist.

## Claims

1. Method for managing a soundproofing, ventilation, air conditioning or lighting system, which is linked with the comfort of persons in a tertiary, industrial or dwelling locality or room, **characterized in that** it consists of automatically determining the comfort practices of the user on the basis of the following steps:
- measurement (A) by means of sensors of dated informations relative to the internal state of the room, the meteorology and cost of energy, and storage of said informations,
- proposal (D), as a function of the previously stored informations, of a certain comfort level to the persons in said room,
- permission (E) to said persons to modify said comfort level by pressure on a sensitive +/- key and
- when the comfort level desired by these persons is reached, determination of a guide value (F2) and storage (F3) of said value.

2. Method for managing heating or air conditioning energy for the locality, **characterized in that** it consists of automatically determining the comfort practices of the user on the basis of the following steps:
A) measurement by means of sensors of dated informations relative to at least the presence of individuals in the locality, the ambient temperature of the locality and the meteorology,
- acquisition of the energy price and calculation of the current time,
B) searching in the memory to establish whether prior analogous informations have already been supplied by the sensors and whether presence modifications have to be subsequently foreseen,
if yes: C1) searching in the memory for an internal, desired temperature associated with said informations,
if no : C2) processing informations supplied by the sensors in order to determine therefrom a temperature desired by the user,
D) storage of the desired temperature obtained in C1) or C2) and application to the generator,
H) proposal of a comfort level corresponding to the temperature stored in D), E) observation to establish whether the user expresses a negative opinion on the comfort obtained:
· if the user expresses a negative opinion: F1) determination of a modified desired temperature, followed by the recommencement of the method at step D),
· if the user does not express a negative opinion: F2) calculation of a guide temperature taking into consideration the evolution of temperatures within the locality due to the thermal response of said locality and the evolution of the meteorology, as well as the storage of said guide temperature,
G) control with respect to an environment conditioning generator in order to supply an energy quantity necessary for reaching said guide temperature and recommencement of the method at step A).

3. Method according to claim 2, **characterized in that** immediately after step F2), it comprises a step F3) consisting of displaying the guide temperature or the given desired temperature in order to inform the user.

4. System for managing heating or air conditioning energy for the locality implementing the method according to claim 2 or 3 and incorporating means for controlling an environmental conditioning generator for establishing the energy quantity which must be supplied by the generator in order to attain a desired temperature, **characterized in that** the control means comprise:
- a time management device,
- a meteorological sensor,
- processing and storage means (10) for processing informations supplied by the sensors, together with the comfort opinions supplied by the user,
- at least one management system-user interface (1) incorporating:
· a multisensor group (5) having at least one presence sensor and an ambient temperature sensor, said multisensor group supplying informations relative to the presence of individuals in the locality and the ambient temperature of the locality,
· display means (2; 8) for supplying the user with informations at least concerning the price of energy and the taking account of requested temperature changes,
· appreciation means (3; 4) enabling the user to indicate his perception of the comfort obtained and
· a means (15) for acting on the environmental conditioning generator.

5. Energy management system according to claim 4, **characterized in that** the processing and storage means consist of a double learning system associated with data bases and incorporating first learning means for determining and storing the temperatures desired by the user and second learning and simulation means for simulating the thermal behaviour of the locality and for calculating and storing the guide temperatures to be applied to the generator.

6. Energy management system according to claim 5, **characterized in that** the first learning system is an expert system.

7. Energy management system according to claim 5 or 6, **characterized in that** the learning and simulation system is a neuron network.

8. Energy management system according to any one of the claims 4 to 7, **characterized in that** the appreciation means comprise at least one sensitive +/- key (3a, 3b) enabling the user to qualitatively express his discontent concerning the comfort level obtained.

9. Energy management system according to any one of the claims 4 to 7, **characterized in that** the appreciation means comprise derogation taking account means (4) able to discern informations relative to exceptional situations.

10. Energy management system according to any one of the claims 4 to 9, **characterized in that** the control means have a central module (10) connected on the one hand to the system-user interface and on the other to a control box of the heating generator (15) in order to globally manage the energy of the locality.

11. Energy management system according to any one of the claims 4 to 9, **characterized in that** the control means incorporate a central module (10) connected on the one hand by an information transfer network (9) to a plurality of system-user interfaces (1a, ... 1c) and on the other to a plurality of control boxes for heating generators (15a, .... 15c), in order to manage the different rooms in the locality independently of one another, each of said rooms having a system-user interface.
